Europäisches Patentamt

European Patent Office

Office européen des brevets

(19)

(11) Publication number: 0 492 307 A2

# EUROPEAN PATENT APPLICATION

(21) Application number: 91121374.2

(22) Date of filing: 12.12.91

(51) Int. Cl.5: H04J 3/14

(30) Priority: 21.12.90 JP 405049/90

(43) Date of publication of application:
01.07.92 Bulletin 92/27

(84) Designated Contracting States:
DE FR GB

(71) Applicant: ADVANTEST CORPORATION
32-1, Asahi-cho 1-chome
Nerima-Ku Tokyo(JP)

(72) Inventor: Sakai, Hiroshi
Room 201 Hasumi Kohpo, 5-10-15, Minami
Hanyu-shi, Saitama(JP)

(74) Representative: Blumbach Weser Bergen
Kramer Zwirner Hoffmann Patentanwälte
Radeckestrasse 43
W-8000 München 60(DE)

(54) Demultiplexer testing device.

(57) In a pulse generator (10) an M sequence (MS1) provided from an M sequence generator (12) is delayed by a shift register (13) by $2^2$ = 4 bits, and the delayed M sequence and the original M sequence are ANDed by an AND circuit (15) to create a test pulse string (TPS) of a mark ratio 1/4, which is supplied to a demultiplexer (18). A clock for operating the M sequence generator is frequency divided by a frequency divider (27) down to 1/4. An M sequence generator in a pulse error measuring device (19) is operated using the frequency-divided clock. An M sequence generated by the M sequence generator is delayed by a shift register (29) by one bit, and the delayed M sequence and the original M sequence are ANDed by an AND circuit (31) to produce a reference pulse string (RPS) of the mark ratio 1/4, which is compared with the output of the demultiplexer in a mismatch detector (23).

FIG. 2

## BACKGROUND OF THE INVENTION

The present invention relates to a demultiplexer testing device in which a maximum length code sequence (hereinafter referred to simply as an M sequence) is generated and bit-shifted, the original and the bit-shifted version of the M sequence are ANDed or ORed to create a pulse string or train of the desired mark rate, the pulse train is provided to a demultiplexer and its output is compared with a reference pulse train to test for pulse errors of the demultiplexer.

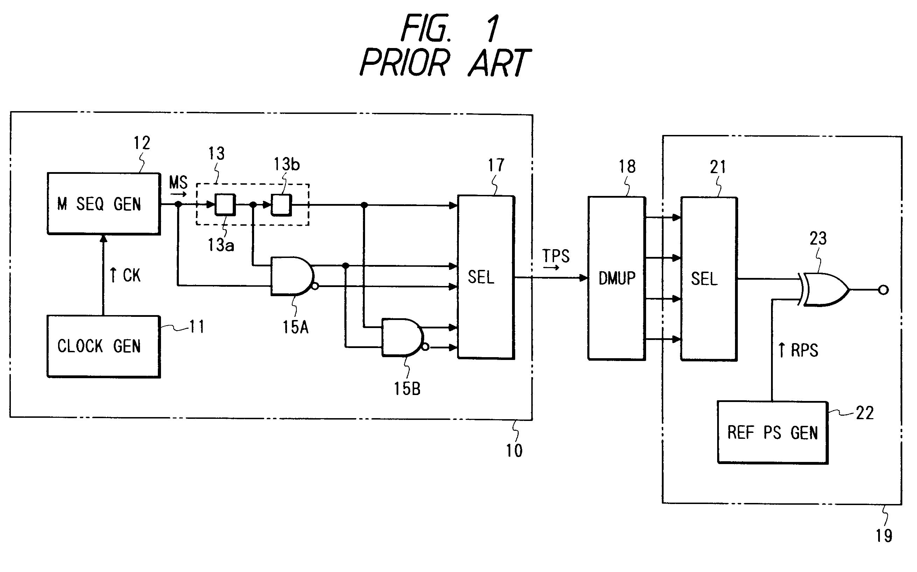

Fig. 1 is a block diagram showing a conventional demultiplexer testing device. In a pulse generator 10 a clock CK from a clock generator 11 is supplied to an M sequence generator 12, in which an M sequence MS is generated in synchronization with the clock CK and from which it is provided to a shift register 13 made up of two shift stages 13a and 13b. The M sequence MS and a 1-bit shifted M sequence output from the first shift stage 13a are ANDed in an AND circuit 15A. A 2-bit shifted M sequence output from the second shift stage 13b and an univerted output of the AND circuit 15A are ANDed in an AND circuit 15B. A pulse train of any one of the shift register 13, uninverted and inverted outputs of the AND circuit 15A and uninverted and inverted outputs of the AND circuit 15B is selected by a selector 17 and is then output as a test pulse string TPS from the pulse generator 10.

The M sequence or maximum length code sequence is also called a pseudo-random pattern and is a repetitive sequence of a random pattern of a $2^N - 1$ bit length. It is well-known that the M sequence generator 12 for generating such an M sequence can be formed by a simple circuit including an N-bit (i.e. N-shift-stage) shift register and an exclusive-OR circuit. The mark ratio of the random-pattern sequence, that is, the rate of generation of "1" in a pulse train composed of "1's" and "0's" is 1/2 and the mark ratio of the output pulse train from the shift register 13, which is supplied with the M sequence MS, is also 1/2. The mark ratio of the uninverted output pulse train from the AND circuit 15A is 1/4, since it is the product of two random pulse trains each having a 1/2 mark ratio, whereas the mark ratio of the inverted output pulse train from the AND circuit 15A is 3/4. Similarly, the uninverted output pulse train from the AND circuit 15B is the product of the pulse train of the 1/2 mark ratio and the pulse train of the 1/4 mark ratio, and hence has a mark ratio of 1/8, and whereas the mark ratio of the corresponding inverted output pulse train is 7/8.

The test pulse string TPS from the pulse generator 10 is applied to a demultiplexer (or separator) under test 18, wherein the input pulses are sequentially distributed to, for example, four outputs, that is, the test pulse string TPS is separated into four pulse strings. One of the four pulse strings is selected by a selector 21, and the selected pulse string is provided to an exclusive-OR circuit 23 in an error measuring device 19, wherein it is compared with a reference pulse string RPS from a reference pulse string generator 22 to test for pulse errors of the demultiplexer 18.

Let it be assumed that the demultiplexer 18 separates the input into $2^k$ (where k is an integer equal to or greater than 1) parallel pulse strings. In the case where the pulse string of the mark ratio 1/2, i.e. the M sequence output from the shift register 13, is being selected by the selector 17, the four outputs of the demultiplexer 18 differ only in phase but are all identical with the M sequence MS output from the M sequence generator 12, because pulse strings extracted from the M sequence every $2^k$ bits has a property of forming the same M sequence as the original M sequence. Hence, the reference pulse string RPS needs only to be produced in the reference pulse string generator 22 through use of the same M sequence generator as that 12 used in the pulse generator 10.

However, when any one of pulse strings other than that of the mark ratio 1/2 has been selected by the selector 17, the selected pulse string does not form the M sequence, and consequently, the reference pulse string generator 22 cannot logically produce the reference pulse string RPS is the same manner as does the M sequence generator employing a shift register and an exclusive-OR circuit. Conventionally, the the reference pulse string generator 22 has a construction in which a correct pulse string of one period is prestored in a memory and is read out therefrom to obtain the reference pulse string RPS. With such a construction, however, as the period of the M sequence MS which is generated by the M sequence generator 12 of the pulse generator 10 increases, the period of the reference pulse string also increases accordingly--this calls for a remarkably large-capacity memory for storing the reference pulse string RPS.

## SUMMARY OF THE INVENTION

It is therefore an object of the present invention to provide a demultiplexer testing device which precludes the necessity of storig the reference pulse string of a desired mark ratio intactin a memory and permits its generation with a simple construction.

According to the present invention, the pulse generator generates, in synchronization with a first clock, a first M sequence of a $2^N - 1$ bit period and a second M sequence bit-shifted by $m = 2^k \cdot p - v$-

($2^N$ - 1) bits (where p and m are integers equal to or greater than 1 and v is an integer) relative to the first M sequence. A logical operation is conducted between the first and second M sequences to produce a test pulse string, which is provided to a demultiplexer under test which separates the input pulse string into $1:2^k$ strings (where k is an integer equal to or greater than 1). In a pulse error measuring device a third M sequence identical with the first M sequence available from the pulse generator and a fourth M sequence obtained by shifting the third M sequence by p bits are generated in synchronization with a second clock obtained by frequency dividing the first clock down to $1/2^k$. A logical operation is conducted between the third and fourth M sequences to produce a reference pulse string. The output pulse string of the demultiplexer and the reference pulse string are compared to test for errors of the demultiplexer.

## BRIEF DESCRIPTION OF THE DRAWINGS

Fig. 1 is a block diagram showing a conventional demultiplexer testing device;

Fig. 2 is a block diagram illustrating an embodiment of the present invention;

Fig. 3 is a diagram showing pulse strings occurring at respective parts of the Fig. 2 embodiment, for explaining its operation;

Fig. 4 is a block diagram illustrating another embodiment of the present invention;

Fig. 5 is a block diagram illustrating another embodiments of the present invention;

Fig. 6 is a block diagram for explaining the generation of a bit-shifted M sequence in still another embodiment of the present invention; and

Fig. 7 is a block diagram showing an example of another logic circuit for obtaining pulse strings of various mark ratios in the respective embodiments.

## DESCRIPTION OF THE PREFERRED EMBODIMENTS

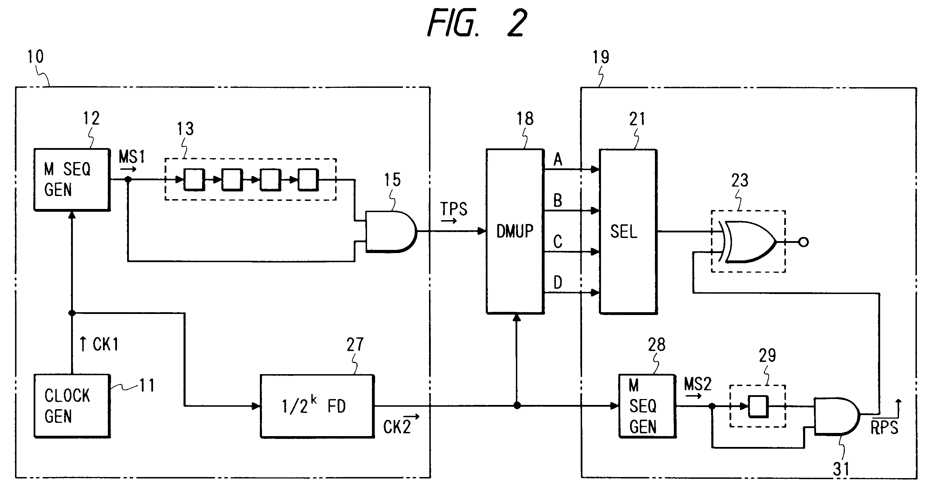

Fig. 2 illustrates in block form an embodiment of the present invention, in which the parts corresponding to those in Fig. 1 are identified by the same reference numerals. In the pulse generator 10 and M sequence MS1 of a $2^N$ - 1 bit period from the M sequence generator 12 is m-bit shifted by the shift register 13. In this case, m is determined to satisfy an equation (1) described later on; for example, it can be selected that $m = 2^k \cdot p$, where $2^k$ is the number of separated outputs of the demultiplexer 18. In this example k = 2, that is, the number of separated outputs of other demultiplexer 18 is four. p is an integer equal to or greater than 1 and, in this example, p = 1. For the sake of brevity, this embodiment is shown to generate only the test pulse string TPS of the mark ratio 1/4. The output of the shift register 13 and the M sequence MS1 prior to the shift are ANDed by the AND circuit 15.

The output clock CK1 of the clock generator 11 is frequency divided by a frequency divider 27 down to $1/2^k$ and its frequency-divided output clock CK2 is provided to the pulse error measuring device 19. The pulse error measuring device 19 includes an M sequence generator 28 which generates an M sequence MS2 identical with the M sequence MS1 available from the pulse generator 10, and the M sequence generator 28 operates on the output clock CK2 from the frequency divider 27. The M sequence MS2 from the M sequence generator 28 is shifted p-bit position by a shift register 29. In this embodiment the M sequence MS2 is shifted one bit position and the output of the shift register 29 and the M sequence MS2 are ANDed by an AND circuit 31. The output of the AND circuit 31 is applied, as the reference pulse string RPS, to a mismatch detector 23 formed by an exclusive-OR circuit. The mismatch detector 23 makes a bit-by-bit logical comparison between one separated output pulse string selected by the selector 21 and the reference pulse string RPS and, when having detected a mismatch between them, output a "1".

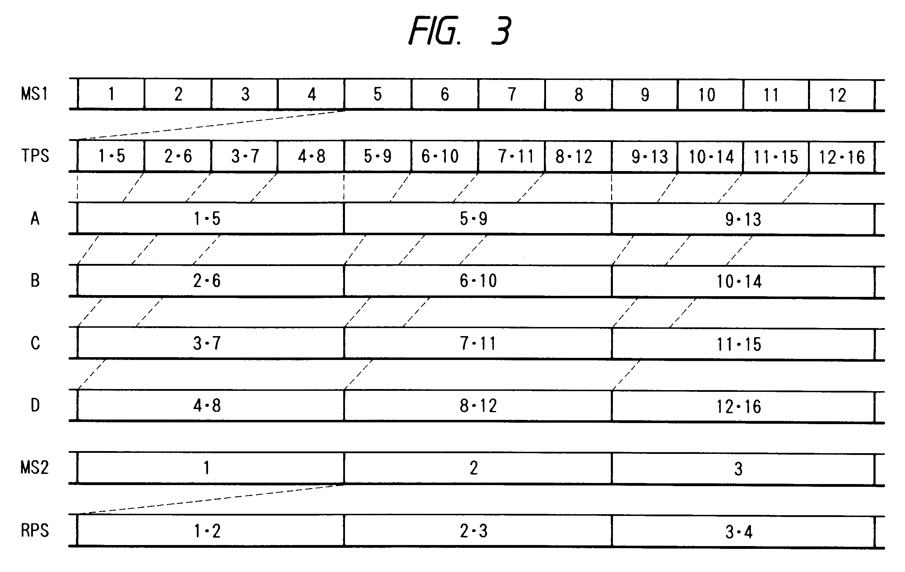

In this example, k = 2, p = 1 and m = 4; so that if the respective bits of the output M sequence MS1 of the M sequence generator 12 are numbered consecutively as shown on Row MS1 in Fig. 3, the AND circuit 15 outputs the AND's 1.5, 2.6, 3.7, ... between every fifth bits in a sequential order as depicted on Row TPS in Fig. 3. Incidentally, the time axis of Row TPS in Fig. 3 is shown to lead Row MS1 by four bits in the interests of saving the space of the drawing. The output pulse string of the AND circuit 15 is provided, as the test pulse string TPS, to the demultiplexer 18, wherein it is distributed into four on a bitwise basis, i.e. four separated pulse strings A, B, C and D shown on Rows A, B, C and D in Fig. 3. These separated pulse strings A, B, C and D are also shown to lead the test pulse string TPS on Row TPS in terms of the time axis.

The separated pulse string shown on Row A in Fig. 3 is a pulse string obtained by carrying out the logical AND's between corresponding bits of a bit string 1, 5, 9, ... formed by extracting bits 1, 5, 9, ... from the original M sequence (Row MS1) and bits 5, 9, 13, ... of a bit string obtained by delaying the extracted bit string one bit position. The bit string 1, 5, 9, ... is formed by extracting every $2^2$-th bits from the original M sequence MS1, and hence has the property of the M sequence and forms the same M sequence as the original one MS1. The bit string 5, 9, ... obtained by delaying the bit string 1, 5, 9, ... one bit position is also an M sequence. Thus, the pulse string obtained by carrying out the logical AND's between them has a mark ratio 1/4. The same is true of the Rows B, C and D. Hence, the output pulse strings A, B, C and D of the demultiplexer 18 all have the mark ratio 1/4 and are sequentially phased apart, besides the pattern of each pulse string is identical with the pattern of the test pulse string TPS prior to its separation.

The M sequence MS2 generated by the M sequence generator 28 in the pulse error measuring device 19 is identical with the M sequence MS1 generated by the M sequence generator 12 as shown on Row MS2 in Fig. 3. The output of the AND circuit 31 is the logical AND between the M sequence MS2 on Row MS2 and its one-bit delayed version as depicted on Row RPS in Fig. 3. Thus, the pulse string shown on Row A in Fig. 3 and the pulse string on Row RPS are both obtained by carrying out the logical AND between the same M sequence and its one-bit delayed version, and hence the both pulse string are identical and, in general, they are phased apart. Consequently, the separated pulse string A shown on Row A in Fig. 3, selected by the selector 21, can be tested by controlling the M sequence generating phase of the M sequence generator 28 to generate a pulse string of the same phase as that of the pulse string on Row A, as the reference pulse string RPS, from the AND circuit 31.

Each of the separated pulse strings shown on Rows B, C and D is also of the same pattern as the pulse string which is similarly obtained by carrying out the logical AND between the original M sequence MS1 and its one-bit delayed version. These pulse strings differ in phase alone and the reference pulse string for each of them can similarly be derived from the output of the AND circuit 31.

In the case where the period of the M sequence is $2^N$ - 1, letting the bit shift amount of the shift register 13 and the number of separated outputs of the demultiplexer 18 be represented by m and $2^k$, respectively, the bit shift amount p of the shift register 29 can be selected from natural numbers which are given by the following equation (1):

$$p = [m + v \cdot (2^N - 1)]/2^k \qquad (1)$$

In the above, v is an integer and if v = 0, the afore-mentioned m = $2^k \cdot p$ is obtained. With respect to the predetermined values k and N, the positive integers m and p and the integer v need to be determined to satisfy Eq. (1). For example, when k = 2 and N = 4, that is, when the period of the M sequence is $2^4$ - 1 = 15 bits long, triads (m, v, p) of the integers m, v and p which satisfy Eq.

(1) can be determined such, for example, as follows: (1, 1, 4), (2, 2, 8), (3, 3, 12), (4, 0, 1), (5, 1, 5), (6, 2, 9), (8, 0, 2), (10, 2, 10), (12, 0, 3), (19, -1, 1). The tried (4, 0, 1) is in the case of Fig. 2. As will be seen from these example, the number of stages of the shift register 29 may be greater than the number of stages of the shift register 13, and the integer v may also assume a minus value.

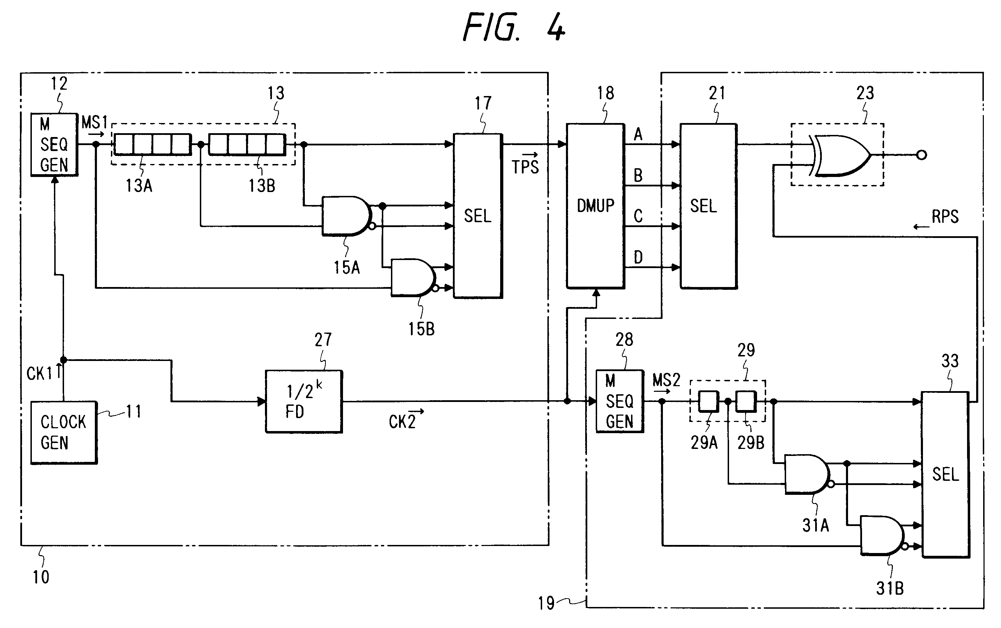

While the embodiment of Fig. 2 has been described to generate the test pulse string TPS of the mark ratio 1/4 by the pulse generator 10, test pulse strings of other mark ratios can also be obtained as follows: For instance, a shift register which satisfies Eq. (1) is connected in series to each of the shift register 13 and 29 in Fig. 2 and the input pulse strings thereto and the output pulse strings therefrom are ANDed to obtain pulse strings of the mark ratio 1/4. By ANDing these pulse strings and the outputs of the AND circuits 15 and 31 in Fig. 2, pulse strings of the mark ratio 1/8 are obtained, and by inverting these pulse strings, pulse strings of the mark ratio 7/8 is obtained. Fig. 4 illustrates an embodiment of such a construction.

Fig. 4 shows the case where the pulse strings of the mark ratios 1/2, 1/4, 3/4. 1/8 and 7/8 are selectable as in the case of Fig. 1. The parts corresponding to those in Fig. 2 are identified by the same reference numerals. The number of separated outputs of the demultiplexer 18 is $2^k$ = 4. In this embodiment the shift register 13 in the pulse generator 10 is formed by a series connection of four-stage shift registers 13A and 13B. The shift registers 13A and 13B provide from their final shift stages M sequences sequentially delayed from m = 4 bits relative to the M sequence MS1 input into the shift register 13, and a pulse string of a desired mark ratio is derived, through logical operation, from these output pulse strings and the input pulse string MS1 of the shifter register 13. That is, the pulse strings input to and output from the shift register 13 are ANDed, and the resulting uninverted and inverted outputs are provided to the selector 17 as pulse strings of the mark ratios 1/4 and 3/4, respectively. The input to the shift register 13A and the uninverted output of the AND circuit 15A are ANDed, and the resulting uninverted and inverted outputs are provided to the selector 17 as pulse strings of the mark ratios 1/8 and 7/8, respectively. The output from the final stage of the shift register 13 is provided to the selector 17 as a pulse string of the mark ratio 1/2. Irrespective of the mark ratio of the pulse string selected by the selector 17, the $2^k$ pulse strings separated by the demultiplexer 18 each have the same mark ratio and the same pattern as does the pulse string TPS and are sequentially displaced apart in phase as referred to previously with respect to Fig. 2.

Also in the pulse error measuring device 19 the shift register 29 is formed by a series connection of shift registers 29A and 29B each having a p = 1 shift stage. The pulse strings input to and output from the shift register 29B are ANDed by an AND circuit 31A, and its uninverted and inverted outputs are provided to a selector 33 as pulse strings of the mark ratios 1/4 and 3/4, respectively. The input to the shift register 29A and the uninverted output from the AND circuit 31A are ANDed by an AND circuit 31B, and its uninverted and inverted outputs are provided to the selector 33 as pulse strings of the mark ratios 1/8 and 7/8, respectively, besides the final stage output of the shift register 29 is also applied to the selector 33. The pulse strings of the respective mark ratios have the same patterns as those of the pulse strings of the corresponding mark ratios which are generated by the pulse generator 10, as is the case with the Fig. 2 embodiment. The selectors 17 and 33 select the pulse strings of the same mark ratio.

Although the above embodiments have been described to employ the shift registers 13 and 29 for generating bit-shifted M sequences in the pulse generator 10 and the pulse error measuring device 19, the bit-shifted M sequences may also be produced by other methods as described below.

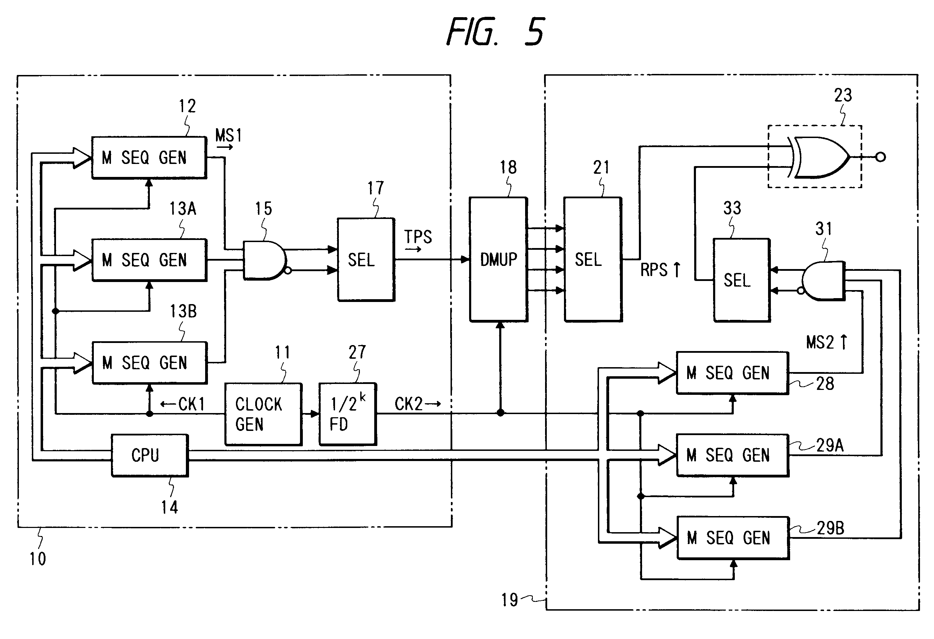

Fig. 5 illustrates in block form another embodiment of the present invention, which employs two M sequence generators 13A and 13B identical in construction with that 12 and in which different initial values are preset, by a CPU 14, in the M sequence generators 12, 13A and 13B to obtain therefrom M sequences shifted relative to one another by predetermined numbers of bits. The M sequence generators 12, 13A and 13B each have the afore-mentioned well-known construction which includes a shift register and an exclusive-OR circuit. The three M sequence generators operate in synchronization with the common clock CK1 and their phased-apart M sequences are ANDed by the AND circuit 15. The uninverted output of the AND circuit 15 is a pulse string of the mark ratio 1/8 and its inverted output is a pulse string of the mark ratio 7/8. Either one of the two pulse strings is selected by the selector 17 and provided as the test pulse string TPS to the demultiplexer under test 18. One of the outputs separated by the demultiplexer 18 is selected by the selector 21 for input into the pulse error measuring device 19.

Also for the generation of the reference pulse string RTS in the pulse error measuring device 19, two M sequence generators 29A and 29B identical in construction with that 28 are provided as in the pulse generator 10, and different initial values are preset by the CPU 14 in these M sequence generators to obtain therefrom three M sequences shifted relative to one another by predetermined numbers of bits. The three M sequences are ANDed by the AND circuit 31 and its uninverted and inverted outputs are applied to the selector 33. The selector 33 selects either one of the two outputs from the AND circuit 31 and applies it as the reference pulse string RPS to the mismatch detector 23, wherein it is compared, bit by bit, with the output pulse string of the demultiplexer 18 selected by the selector 21 to thereby detect a mismatch therebetween.

The Fig. 5 embodiment is advantageous in that the relative phases of the M sequences to be generated can freely be changed by arbitrarily changing the initial values which are set by the CPU 14 in the M sequence generators 12, 13A, 13B, 29A and 29B. That is, the foregoing description has been given in connection with the case of different initial values being set in the M sequence generators 12, 13A and 13B, but if the same initial value is set in the three M sequence generators, they provide M sequences of the same phase, and consequently, the outputs of the AND circuit 15 also becomes an M sequence and its mark ratio is 1/2. In the case where the same initial value is set in two of the three M sequence generators 12, 13A and 13B and a different initial value is set in the remaining M sequence generator, the mark ratio of the uninverted output pulse string of the AND circuit 15 is 1/4 and the mark ratio of the inverted output pulse string is 3/4. The same is true of the M sequence generators 28, 29A and 29B. By changing the initial values to be set in the M sequence generators by the CPU 14 as mentioned above, the mark ratios, of the output pulse strings of the logic circuits 15 and 31 can be changed.

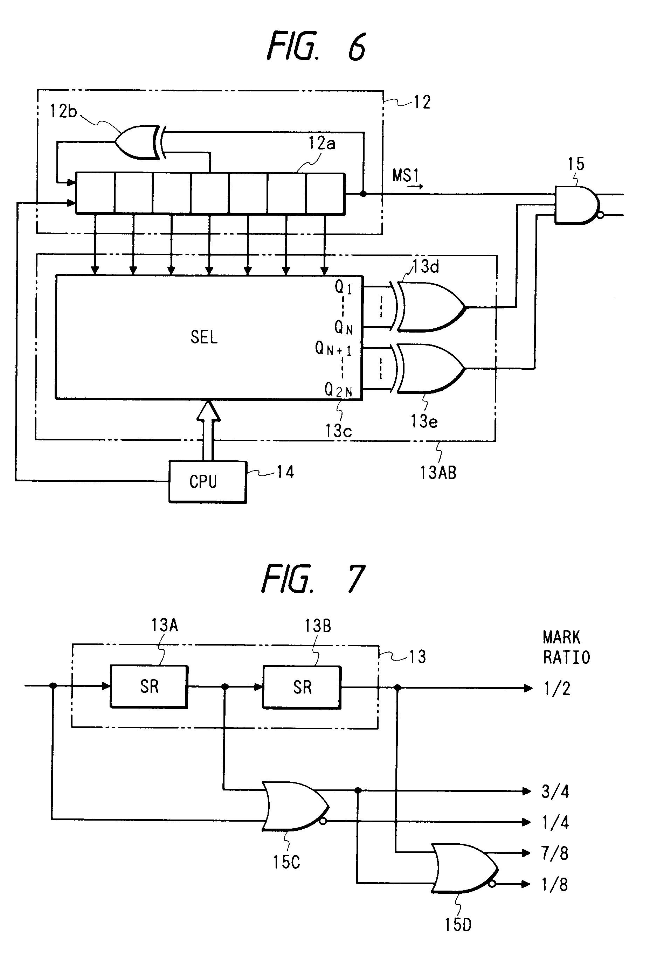

Fig. 6 illustrates in block form another example of the construction for generating the bit-shifted M sequence in the pulse generator 10 of each of the above embodiments. The M sequence generator 12 comprises, for example, an N-bit shift register 12a and an exclusive-OR circuit 12b. The output from the final stage of the shift register 12A and the output of its arbitrarily predetermined intermediate stage are applied to the exclusive-OR circuit 12b, and its exclusive-OR output is fed back to the input of the shift register 12a. From the respective stages of the shift register 12a are provided M sequences which are displaced apart in phase but have the same pattern which repeats every $2^N - 1$ bits. It is well-known in the art that an M sequence shifted a desired number of bits relative to the output M sequence MS1 from the shift register 12a can be obtained by exclusive-ORing the outputs from two or more desired number of shift stages of the shift register 12a. Then, in this embodiment the outputs from the respective shift stages of the shift register 12a are provided to a selector 13c, from which desired ones of them, specified by the CPU 14, are provided to output terminals $Q_1$, to $Q_N$ and

$Q_{N+1}$ to $Q_{2N}$. The outputs $Q_1$ to $Q_N$ are exclusive-ORed by an exclusive-OR circuit 13d, from which is output an M sequence shifted a desired number of bits relative to the output M sequence MS1 of the M sequence generator 12. The outputs $Q_{N+1}$ to $Q_{2N}$ are exclusive-ORed by an exclusive-OR circuit 13e, from which is output an M sequence shifter a desired number of bits relative to the M sequence MS1 from the M sequence generator 12. In other words, the selector 13c and the exclusive-OR circuits 13d and 13e constitute means 13AB for generating bit-shifted M sequences. The bit-shifted M sequences from the exclusive-OR circuits 13d and 13e provided to the AND circuit 15 together with the M sequence MS1.

Also in this embodiment, since the outputs of desired shift stages of the shift register 12a can selectively be applied to the exclusive-OR circuits 13d and 13e under control of the CPU 14, the phases of the M sequences avaliable from them can be freely changed relative to the M sequence MS1. The construction of Fig. 6 has been described as being applied to the pulse generator 10 and is applicable as well to the pulse error measuring device 19.

While the above-described embodiments each employ the logical product in the logical operation for generating a pulse string of a desired mark ratio, the logical sum may also be utilized as shown in Fig. 7 wherein there are depicted only the shift register 13 and logical circuits connected thereto in the pulse generator 10. That is, pulse strings of desired mark ratios can be obtained even by using OR circuits 15C and 15D in place of the AND circuits 15A and 15B in Fig. 4. Likewise, an OR circuit may be used in place of the AND circuit for generating a pulse string of a desired mark ratio in the pulse error measuring device 19. The frequency divider 27 in Figs. 2 and 4 may be provided outside the pulse generator 10.

As described above, according to the present invention, an M sequence and another M sequence obtained by shifting it a predetermined number m of bits in accordance with the number of separated outputs $2^k$ of the demultiplexer are created in the pulse generator 10 and a test pulse string of a desired mark ratio is derived from these M sequences through logical operation. On the other hand, in the pulse error measuring device 19 an M sequence and another M sequence obtained by shifting it p bit positions are produced and a reference pulse string of a desired mark ratio is derived from these M sequences through logical operation. By determining m and p in a manner to satisfy Eq. (1), the reference pulse string for comparison with the pulse strings separated by the demultiplexer can be created with a simple construction. Hence, the reference pulse string for checking the output pulses of the demultiplexer can be produced by a simple-structured M sequence generator-this does not necessitate the use of a large-capacity memory for storing the reference pulses and consequently affords reduction of the scale of hardware accordingly.

It will be apparent that many modifications and variations may be effected without departing from the scope of the novel concepts of the present invention.

## Claims

1. A demultiplexer testing device comrinsing:

   test pulse string generating means for applying an input pulse string to a demultiplexer under test which separates said input pulse string into $1:2^k$; and

   pulse error measuring means which generates a reference pulse string and compares it with a separated pulse string from said demultiplexer under test to detect a mismatch therebetween;

   wherein said test pulse string generating means includes:

   first M sequence generating means whereby a first M sequence repeating with a period of $2^k - 1$ bits is generated in synchronization with a clock;

   second M sequence generating means for generating a second M sequence which is an M sequence shifted m bits relative to said first M sequence; and

   first logical circuit means whereby a pulse string of a desired mark ratio is derived, as said test pulse string, from said first and second M sequences through logical operation;

   wherein said pulse error measuring means incluseds:

   third M sequence generating means whereby a third M sequence of the same pattern as that of said first M sequence is generated is synchronization with a clock obtained by frequency dividing said clock down to $1/2^k$;

   fourth M sequence generating means for generating a fourth M sequence which is an M sequence shifted p bits relative to said third M sequence;

   second logical operation means whereby a pulse string of said mark ratio is derived, as said reference pulse string, from said third and fourth M sequences through logical operation; and

   mismatch detecting means which compares the logic of said reference pulse string and the logic of the output pulse string of said demultiplexer under test on a bitwise basis to detect a mismatch therebetween;

and

wherein said m, p, k and N are integers each equal to or greater than 1 and are determined so that they satisfy the following equation;

$$p = [m + v \cdot (2^N - 1)]/2^k$$

where v is a desired integer.

2. The device of claim 1 wherein said second and fourth M sequence generating means are first and second shift register means each having at least $2^k \cdot p$-bit shift stages and which are supplied with said first and third M sequences from said first and third M sequence generating means, pulse strings available from $2^k \cdot p$-th shift stages of said second and fourth M sequence generating means, derived from said inputs thereto, being output as said second and fourth M sequences.

3. The device of claim 1 wherein said first, second, third and fourth M sequence generating means each include shift register means having shift stages of N bits and exclusive-OR means which exclusive-ORs pulse strings from two shift stages of said shift register means and feeds back said exclusive-OR to the input thereof, and said first, second, third and fourth M sequences are each output from a predetermined one of said shift stages of each of said shift register means.

4. The device of claim 3 further comprising means for setting an initial value in said shift register means of each of said first, second, third and fourth M sequence generating means.

5. The device of claim 1 wherein said first and third M sequence generating means each include shift register means having shift stages of N bits and exclusive-OR means which exclusive-ORs pulse strings from two shift stages of said shift register means, each of said first and third M sequence being output from a predetermined one of said shift stages of said shift register means, and wherein said second and fourth M sequence generating means each include selector means which selects at least two shift stages of said shift register means and outputs therefrom pulse strings and exclusive-OR means which exclusive-ORs at least two pulse strings from said selector means and outputs the resulting pulse string as one of said second and fourth M sequences, said device further comprising select control means for specifying the selection of said shift stages by said selector means of said first and third sequence generating means.

6. The device of claim 5 further comprising means for setting an initial value in said shift register means of each of said first and third M sequence generating means.

FIG. 1
PRIOR ART

*FIG. 2*

10

12 — M SEQ GEN
MS1
11 — CLOCK GEN
↑CK1
13
15
TPS
27 — 1/2^k FD
CK2

18 — DMUP
A B C D
19
21 — SEL
23
31
RPS
29
28 — M SEQ GEN
MS2

FIG. 3

FIG. 4

EP 0 492 307 A2

FIG. 5

# FIG. 6

# FIG. 7